# EUROPEAN PATENT APPLICATION

(11) **EP 4 257 438 A1**
(43) Date of publication of application: **11.10.2023**
(21) Application number: 22166677.9
(22) Date of filing: 05.04.2022
(51) Int. Cl.: B60T 7/04, B60T 11/10, B60T 13/22, B60T 13/68, B60T 13/14

(54) **BRAKING DEVICE AND BRAKING SYSTEM FOR BRAKING A VEHICLE, VEHICLE, METHOD FOR BRAKING A VEHICLE, COMPUTER PROGRAM, COMPUTER READABLE MEDIUM AND CONTROL UNIT**

(71) Applicant: Volvo Construction Equipment AB, 631 85 Eskilstuna (SE)
(72) Inventor: Dusemund, Björn, 54292 Trier (DE); Weidke, Tim, 54426 Hilscheid (DE)
(74) Representative: Eisenführ Speiser

(57) **Abstract**

A braking device (1) for braking a vehicle (3), in particular for braking a mobile working machine, preferably for braking a compact wheel loader, the braking device (1) comprising: a hydraulically actuated service brake (10) configured for braking the vehicle (3), wherein the service brake (10) comprises a service brake cylinder (11) that is configured to transfer a service braking force to a disk pack unit (12) while braking and the disk pack unit (12) that is configured for braking the vehicle (3) depending on the braking force, and a hydraulically actuated parking brake (20), wherein the parking brake (20) is a spring applied hydraulic release brake that is configured for braking the vehicle (3) depending on a parking brake force, wherein the parking brake (20) comprises a spring braking unit (21) that is configured to generate a default parking brake force and to transfer the default parking brake force onto a parking brake cylinder (22), and a hydraulic park braking control unit (23) that is configured to generate a release force and to transfer the release force onto the parking brake cylinder (22) in order to control the parking brake force, and the parking brake cylinder (22) that is in mechanical contact with the disk pack unit (12), wherein the parking brake cylinder (22) is configured to transfer the parking braking force to the disk pack unit (12) while braking depending on the control parking brake force and the default parking brake force, characterized in that the hydraulic park braking control unit (23) comprises a control valve (24) that is hydraulically connected to the parking brake (20) configured for controlling a hydraulic pressure inside of the parking brake (20) depending on a braking signal for hydraulically actuating and/or releasing the parking brake (20).

## Description

### TECHNICAL FIELD

The invention relates to a braking device and braking system for braking a vehicle. Further, the invention relates to a vehicle. Additionally, the invention relates to method for braking a vehicle. Further, the invention relates to a computer program, a computer readable medium, and a control unit.

The invention is applicable on vehicles. In particular, the invention is applicable on working machines within the fields of industrial construction machines or construction equipment. For example, a wheel loader or a paver is a working machine. Although the invention will be described with particular respect to a wheel loader, the invention is not restricted to this particular machine, but may also be used in other working machines such as articulated haulers, excavators and backhoe loaders or any other vehicle in general. It may be preferred that the vehicle is an electric vehicle, in particular an electric compact wheel loader or alike.

### BACKGROUND

In connection with transportation of heavy loads at construction sites or the like, a working machine is often used. The working machines may be utilized for transportations in connection with road or tunnel building, sand pits, mines, forestry and similar environments. Thus, a working machine is frequently operated with large and heavy loads in rough terrain and on slippery ground where no regular roads are present. Thus, a reliable and user-friendly brake is required.

Today, most of the working machines, such as a compact wheel loader, are equipped with a service brake and a separate parking brake. Usually, the service brake is equipped with a dry disk brake that is actuated by pedal actuated brake piston. However, the durability of such kind of dry disk brake is relatively low. To increase the durability of the service brake, it is known to equip service brakes with a lamellar wet disk brake and a spring applied hydraulically released brakes.

From KR20200077015A a braking system is known that is capable of braking by using hydraulic pressure intelligently in an emergency using a service brake and a spring applied hydraulically released brakes as parking brake simultaneously depending on a detected time and pressure the pedal is pressed.

Brake systems are also known from US 2020/0071910 A1 and JP H07 228242 A. US 2020/0071910 A1 relates to an adaptive park braking hydraulic circuit that may be in fluid communication with pressure sensors, a service brake assemblies and an adaptive park brake. JP H07 228242 A discloses an auxiliary brake device that provides an additional braking force for a hydraulic service brake according to a depression of the brake pedal detected by a brake actuation detector.

The prior art has several disadvantages. There is a need for improvements in the field of braking vehicles, in particular in braking a mobile working machine, preferably in braking a compact wheel loader. In particular, lamellar wet disk brakes have the disadvantage that they require a large oil volume for actuating the brake in comparison to dry disk brakes. This makes the braking of a vehicle less user-friendly.

In order to assure proper braking of the vehicle and to meet the legal requirements one has to use a two-stroke piston for brake actuation if one uses a service brake comprising a lamellar wet disk brake. Such a two-stroke piston for brake actuation has several disadvantages. In particular, in comparison to dry disk brakes, the lamellar wet disk brake requires a high oil volume to be actuated. This need for high oil volumes of lamellar wet disk brakes is detrimental compared to dry disk brakes. Especially because the need for high oil volumes respectively high oil volume flows results in a high increase of brake pedal angle and pedal force.

### SUMMARY

An object of the invention is to provide a braking device, braking system, a vehicle, a method, computer program, a computer readable medium, and a control unit to overcome the disadvantages of the prior art. In particular, an object of the invention is to provide a braking device, braking system, a vehicle, a method, computer program, a computer readable medium, and a control unit to improve the braking of vehicles. Preferably, an object of the invention is to provide a braking device, braking system, a vehicle, a method, computer program, a computer readable medium, and a control unit that enable braking a vehicle with a high durability of the braking device and at the same time allow user friendly braking of the vehicle, in particular in accordance to legal requirements. Most preferably, an object of the invention is to provide a braking device, braking system, a vehicle, a method, computer program, a computer readable medium, and a control unit that enable braking a vehicle with a high durability of the braking device and at the same time reduce the needed pedal angle to a minimum and enable the use of a minimum size of the second stroke of the two-stroke brake piston to reduce the needed brake pedal forces to a minimum.

According to one aspect of the invention, the object is achieved by a braking device for braking a vehicle according to claim 1. In particular, the braking device is adapted for braking a mobile working machine, preferably for braking a compact wheel loader.

The braking device comprises a hydraulically actuated service brake and a hydraulically actuated parking brake.

The hydraulically actuated service brake is configured for braking the vehicle. In particular, the hydraulically actuated service brake is configured for braking the vehicle if the parking brake fails. The service brake comprises a service brake cylinder and a disk pack unit. The service brake cylinder is configured to transfer a service braking force induced by a master brake cylinder, in particular a one-stroke brake piston and/or two-stroke brake piston, in operation to the disk pack unit while braking. For example, the master brake cylinder provides a braking force depending on a deflection of a braking pedal. The disk pack unit is configured for braking the vehicle depending on the braking force. Depending on the braking force induced, the one or more disks of the disk pack unit cause the braking of a vehicle. Usually, an increased number of disks or a larger diameter of the disks may increase the braking effect of the vehicle.

The disk pack unit may comprise one or more disks. The disk pack unit may be a dry disk brake or a wet disk brake. Preferably, the disk pack unit is a lamellar brake. In particular, the disk pack unit comprises a brake piston for braking. Usually, while braking, the brake piston the one or more disks of the disk pack unit are in mechanical contact with one another for braking the vehicle.

The hydraulically actuated parking brake is a spring applied hydraulic release brake that is configured for braking the vehicle depending on a parking brake force. The parking brake comprises a spring braking unit, a hydraulic park braking control unit, and a parking brake cylinder.

The brake device may comprise a brake device housing. Preferably, the service brake cylinder and the disk pack unit are arranged inside a housing. In particular, the brake device housing incorporates the service brake and the parking brake, most preferably in a fluid tight manner. It may be preferred that the brake device housing is a multi-piece housing. Preferably, the brake device housing could include a first housing unit and a second housing unit that are connected to each other in a fluid-tight manner. In particular, the first housing unit may incorporate the service brake and the second housing unit may incorporate the parking brake.

Preferably, the brake device housing comprises a first and second hydraulic connection. In particular, the first housing unit comprises the first hydraulic connection and the second housing unit comprises the second hydraulic connection. The first hydraulic connection may be connected with a first hydraulic source and the second hydraulic connection may be connected with a second hydraulic source. It could be preferred that the first and second hydraulic source are the same hydraulic source. However, most preferably, the first and second hydraulic source are different hydraulic sources. The hydraulic connections are configured to be connected to the respective hydraulic source via hose, pipes or alike. Those hose, pipes or alike need to be configured to provide a pressurized hydraulic medium from the respective hydraulic source to the service brake and/or parking brake. The first and second hydraulic source are some kind of pump or alike. For example, the hydraulic source may be a two-stroke piston, a vibration pump, a rotatory pump or alike.

Preferably, the control valve is arranged between the second hydraulic source and the parking brake for controlling, i.e. actuating and/or releasing the parking brake. In particular, depending on the control valve the release force is controlled.

Preferably, the brake device comprises a braking pedal. In particular, the braking pedal is connected with the first hydraulic source, preferably the master brake cylinder, in particular a one-stroke brake piston and/or two-stroke piston, for actuating the service brake cylinder. For example, the braking pedal is mechanically connected to the first hydraulic source, preferably the master brake cylinder, in particular the two-stroke piston. Most preferably, the braking pedal and the first hydraulic source, preferably the master brake cylinder, in particular the one-stroke brake piston and/or the two-stroke piston, are coupled for force transmission for braking the vehicle.

The spring braking unit is configured to generate a default parking brake force and to transfer the default parking brake force onto the parking brake cylinder. The hydraulic park braking control unit is configured to generate a release force and to transfer the release force onto the parking brake cylinder in order to control the parking brake force. The parking brake cylinder is in mechanical contact with the disk pack unit. The parking brake cylinder is configured to transfer the parking braking force to the disk pack unit while braking depending on the control parking brake force and the default parking brake force. In particular, the parking brake cylinder and the disk pack unit are coupled for force transmission for braking the vehicle. Preferably, it is to be understood that merely the default parking brake force is transferred onto the parking brake cylinder if no hydraulic pressure is supplied to the parking brake. Thus, in this case, the parking brake supports the braking of the vehicle. If the parking brake is supplied with a hydraulic pressure, the release force generated acts in opposite direction of the default parking brake force. In this case, the braking of the vehicle is supported less by the parking brake. If the release force is equal to or exceeds the default parking brake force, the parking brake does not contribute to braking the vehicle at all. If the release force is smaller than the default parking brake force the parking brake contributes to braking the vehicle. In particular, the park braking cylinder is pressed against the disk pack unit, which leads to braking the vehicle.

The hydraulic park braking control unit comprises a control valve that is hydraulically connected to the parking brake configured for controlling a hydraulic pressure inside of the parking brake depending on a braking signal for hydraulically actuating and/or releasing the parking brake. In particular, the control valve is configured to actuate the parking brake, in particular the spring applied hydraulic release brake, with a constant supply pressure. Depending on the control valve it is controlled to what degree the parking brake contributes to braking the vehicle as described above.

By that the disk pack unit is already emptying the oil volume and slightly compressing the brake disc respectively the brake disks of the disk pack unit using the default parking brake force generated by the spring braking unit. Therefore, the service brake cylinder is not needed to provide the full oil volume and so a pedal actuation, for example an actuation angle, is greatly reduced. Since a one-stroke brake piston and/or a two-stroke piston is used the piston can directly shift over to the high force ratio and enable high brake forces at low brake pedal forces. In particular, since the invention reduces the oil volume needed for braking by using the spring applied hydraulically release brake, a one-stroke brake piston and/or a two-stroke piston of a smaller size may be used in comparison to regular braking devices.

Since the service brake and the parking brake are used as a whole, the braking device is also compliant with legal requirements.

According to a preferred embodiment the control valve is a proportional valve and/or a 3/2 directional valve and/or a spring reset valve. Such a valve allows safe operation of the brake device and is easy to operate. Further, such a device may be easily signal coupled to existing devices and an existing control unit of the vehicle.

Based upon a further preferred embodiment, the braking device comprises a sensor unit that is adapted for detecting the braking signal for braking the vehicle.

Yet in another preferred embodiment, the sensor unit comprises an angle sensor that is configured for detecting an angle of a braking pedal, and/or a position sensor that is configured for detecting a position of the braking pedal and/or a position of the service brake cylinder, and/or a hydraulic pressure sensor that is configured for detecting a hydraulic pressure inside of the parking brake. In particular, by using the angle sensor that is configured for detecting an angle of a braking pedal, the spring applied hydraulic release brake can be applied proportionally to the service brake actuation.

According to a further preferred embodiment, the control valve controls the hydraulic flow into the parking brake for releasing the parking brake and/or out of the parking brake for braking the parking brake depending on the braking signal detected by the sensor unit.

Further, according to a preferred embodiment, the parking brake is actuated depending on an opening pressure, and/or the service brake is actuated depending on an actuation pressure.

According to yet another preferred embodiment, the service brake comprises a hydraulic service braking control unit that is configured to generate the service braking force and to transfer the service braking force to the service brake cylinder, wherein preferably, the hydraulic service braking control unit comprises a master brake cylinder that is hydraulically connected to the service brake cylinder for generating the service braking force and/or a brake pedal that is connected to the master brake cylinder. Preferably, the hydraulic service braking control unit comprises the first hydraulic source. In particular, the first hydraulic source is the master brake cylinder.

According to a further aspect of the invention, the object is achieved by a braking system for braking a vehicle according to claim 8. In particular, the braking system is adapted for braking a mobile working machine, preferably for braking a compact wheel loader.

The braking system comprises a braking device as described above. Further, the braking system comprises a hydraulic pump for providing a hydraulic medium inside of the parking brake, and/or a hydraulic accumulator for providing a hydraulic medium inside of the parking brake, and/or a check valve, preferably arranged between the hydraulic pump and the control valve, in particular arranged between the pump and the hydraulic accumulator.

Preferably, the braking device, in particular the parking brake, and/or the hydraulic pump and/or the hydraulic accumulator and/or the check valve and/or the control valve are in fluid communication. Preferably, the control valve is arranged between the parking brake and the hydraulic pump. Further preferably, the check valve is arranged between the control valve and the hydraulic pump. In particular, the hydraulic accumulator is arranged between the control valve and the hydraulic pump, more preferably between the control valve and the check valve.

As to the advantages, preferred embodiments and details of the braking system, reference is made to the corresponding aspect and embodiments of the brake device described herein above as well as of the further aspects and their embodiments described herein below.

According to a further aspect of the invention, the object is achieved by a vehicle according to claim 9. In particular, the vehicle is a mobile working machine, preferably a compact wheel loader. The vehicle comprises a braking device and/or a braking system as described above.

As to the advantages, preferred embodiments and details of the vehicle, reference is made to the corresponding aspect and embodiments of the brake device and/or braking system described herein above as well as of the further aspects and their embodiments described herein below.

According to a further aspect of the invention, the object is achieved by a method according to claim 10 for braking a vehicle as described above. In particular, the method is adapted for a mobile working machine, preferably for a compact wheel loader.

The vehicle comprises a braking device and/or a braking system as described above.

The method comprises the step of determining the braking signal detected by a sensor unit, wherein preferably, the braking signal is an angle of a braking pedal and/or a position of the braking pedal and/or a position of the service brake cylinder and/or the master brake cylinder, and/or the hydraulic pressure inside of a parking brake; and the step of controlling the hydraulic pressure inside of the parking brake and/or the service brake depending on the determined braking signal for hydraulically actuating and/or releasing the parking brake in order to brake the vehicle.

As to the advantages, preferred embodiments and details of the method, reference is made to the corresponding aspect and embodiments described herein above as well as of the further aspects and their embodiments described herein below.

According to a preferred embodiment of the method the parking brake is actuated depending on, in particular proportionally to, the determined braking signal, in a regular operation of the parking brake. Proportionally to the brake signal input provided by the sensor unit to the spring applied hydraulic release brake is actuated by the hydraulic park braking control unit to conduct the service brake request of the driver. The hydraulic service braking control unit has only minor impact to the brake characteristic.

Additionally or alternatively, the service brake is actuated depending on the determined braking signal in a failure operation of the parking brake. In case of a failure of the hydraulic park braking control unit brake actuating the spring applied hydraulic release brake, the hydraulic service braking control unit conducts the service brake request of the driver. In this case, the hydraulic service braking control unit has fully impact to the brake characteristic.

According to a further preferred embodiment, the parking brake is released if the control parking brake force resulting from the hydraulic pressure inside of the parking brake is larger than the default parking brake force induced by the spring brake unit. Additionally or alternatively, the parking brake is hydraulically actuated if the control parking brake force resulting from the hydraulic pressure inside of the parking brake is smaller than the default parking brake force induced by the spring brake unit.

According to a further aspect of the invention, the object is achieved by a computer program according to claim 13. The computer program comprises program code means for performing the steps described above when said program is run on a computer.

As to the advantages, preferred embodiments and details of the computer program, reference is made to the corresponding aspect and embodiments described herein above as well as of the further aspects and their embodiments described herein below.

According to a further aspect of the invention, the object is achieved by a computer readable medium according to claim 14. The computer readable medium is carrying a computer program comprising program code means for performing the steps described above when said program product is run on a computer.

As to the advantages, preferred embodiments and details of the computer readable medium, reference is made to the corresponding aspect and embodiments described herein above as well as of the further aspect and their embodiments described herein below.

According to a further aspect of the invention, the object is achieved by a control unit according to claim 15. The control unit is configured for controlling a braking device described above and/or for controlling a braking system described above, wherein the control unit is configured to perform the steps described above.

As to the advantages, preferred embodiments and details of the control unit, reference is made to the corresponding aspect and embodiments described herein above.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
- Fig. 1: is a schematic view of a vehicle in a preferred embodiment;
- Fig. 2: is a schematic view of a braking system in a preferred embodiment;
- Fig. 3: is a schematic view of a braking system in a preferred embodiment based upon the braking device shown in Fig. 2; and
- Fig. 4: is a schematic block diagram of the method in a preferred embodiment.

### DETAILED DESCRIPTION OF EXAMPLE EMBODIMENTS OF THE INVENTION

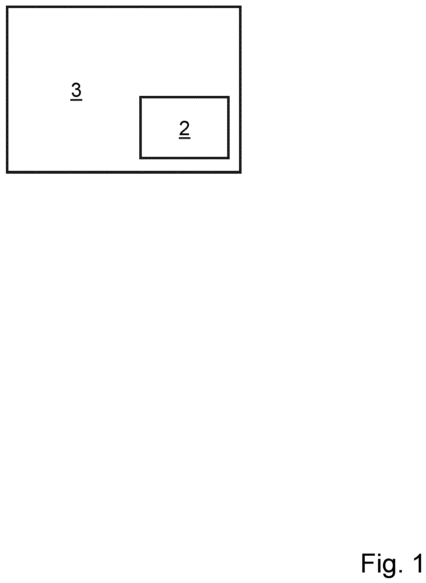

Figure 1 is a schematic view of a vehicle 3 in a preferred embodiment having a braking system 2 in a preferred embodiment. The braking system 2 comprises a braking device 1.

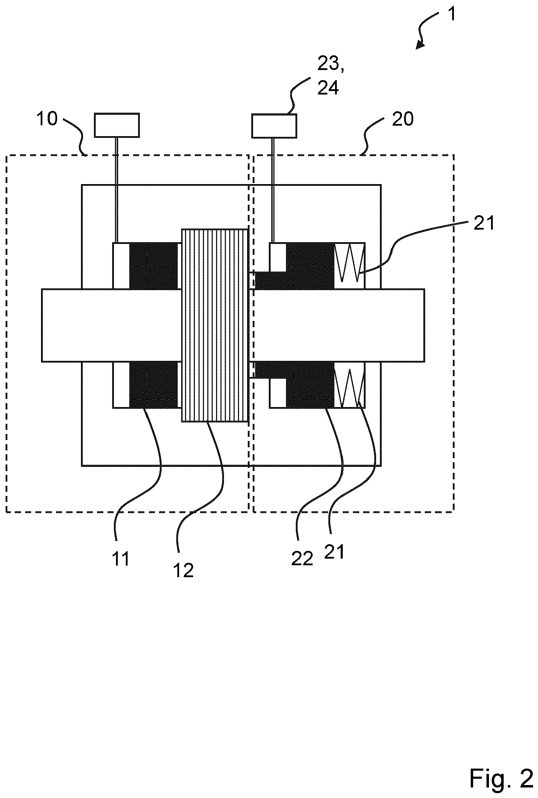

Figure 2 is a schematic view of a braking device 1 in a preferred embodiment. The braking device 1 is adapted for braking compact wheel loader or a vehicle 3 alike.

The braking device comprises a hydraulically actuated service brake 10. The service brake 10 is configured for braking the compact wheel loader 3. For this purpose, the service brake 10 comprises a service brake cylinder 11 and a disk pack unit 12. The service brake cylinder 11 is configured to transfer a service braking force to the disk pack unit 12 while braking the compact wheel loader 3. The disk pack unit 12 is configured for braking the compact wheel loader 3 depending on the braking force.

Furthermore, the braking device comprises a hydraulically actuated parking brake 20. The parking brake 20 is a spring applied hydraulic release brake. The spring applied hydraulic release brake is configured for braking the compact wheel loader 3 depending on a parking brake force. For this purpose, the parking brake 20 comprises a spring braking unit 21, a hydraulic park braking control unit 23, and a parking brake cylinder 22.

The spring braking unit 21 is configured to generate a default parking brake force and to transfer the default parking brake force onto a parking brake cylinder22. The hydraulic park braking control unit 23 is configured to generate a release force and to transfer the release force onto the parking brake cylinder 22 in order to control the parking brake force. Finally, the parking brake cylinder 22 is in mechanical contact with the disk pack unit 12. Thereby, the parking brake cylinder 22 is configured to transfer the parking braking force to the disk pack unit 12 while braking depending on the control parking brake force and the default parking brake force.

The hydraulic park braking control unit 23 comprises a control valve 24. The control valve 24 is hydraulically connected to the parking brake 20 and configured for controlling a hydraulic pressure inside of the parking brake 20. The hydraulic pressure inside of the parking brake 20 is controlled depending on a braking signal for hydraulically actuating and/or releasing the parking brake 20.

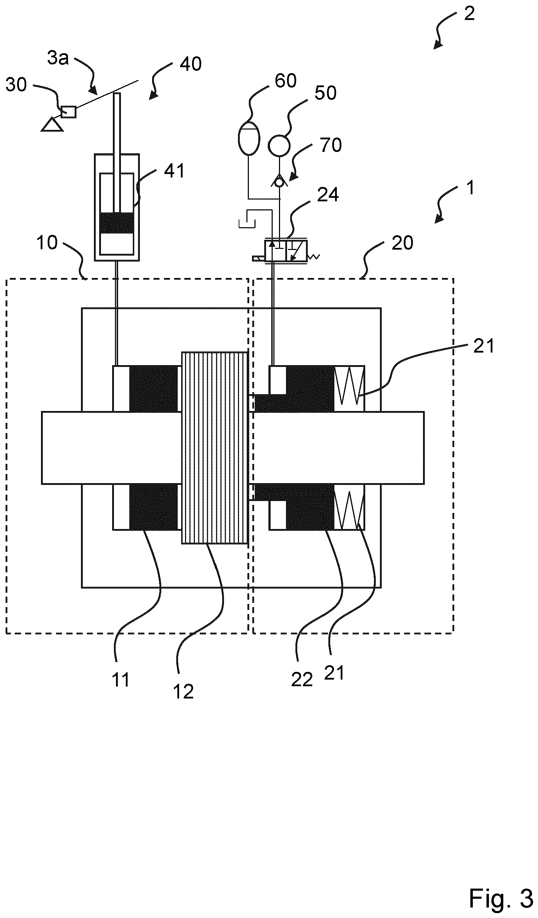

Figure 3 is a schematic view of a braking system 2 in a preferred embodiment based upon the braking device 1 as elaborated above with respect to Figure 2.

In this preferred embodiment, the control valve 24 is a proportional 3/2 directional valve with a spring reset. The control valve 24 controls the hydraulic flow into the parking brake 20 for releasing the parking brake 20 and out of the parking brake 20 for braking the parking brake 20 depending on the braking signal detected by a sensor unit 30. The sensor unit 30 is adapted for detecting the braking signal for braking the compact wheel loader 3. Hereto, the sensor unit 30 may comprise different kind of sensors that are adapted to detect a respective braking signal. For example, the sensor unit may comprise an angle sensor, a position sensor, and/or a hydraulic pressure sensor. In this preferred embodiment, the sensor unit 30 comprises an angle sensor that is configured for detecting an angle of a braking pedal 3a.

For controlling the braking of the compact wheel loader, the service brake 10 comprises a hydraulic service braking control unit 40 that is configured to generate the service braking force and to transfer the service braking force to the service brake cylinder 11. In this preferred embodiment, the hydraulic service braking control unit 40 comprises a master brake cylinder 41 that is hydraulically connected to the service brake cylinder 11 for generating the service braking force. It is to be understood that the parking brake 20 is actuated depending on an opening pressure and the service brake 10 is actuated depending on an actuation pressure.

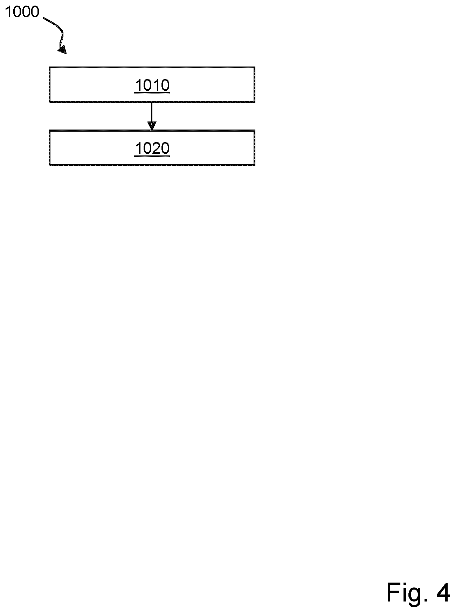

Figure 4 is a schematic block diagram of the method 1000 in a preferred embodiment. The method comprises the step of determining 1010 the braking signal detected by a sensor unit 30. In this preferred embodiment, the braking signal is an angle of the braking pedal 3a. However, it is to be understood that the braking signal could also be a signal of a position of the braking pedal 3a and/or a position of the service brake cylinder 11, and/or the hydraulic pressure inside of a parking brake 20.

Further, the method comprises the step of controlling 1020 the hydraulic pressure inside of the parking brake 20 and the service brake 10 depending on the determined braking signal for hydraulically actuating and releasing the parking brake 20 in order to brake the compact wheel loader 3. In this preferred embodiment, in a regular operation of the parking brake 20, the parking brake 20 is actuated depending on and proportionally to the determined braking signal. Further, in a failure operation of the parking brake 20, the service brake 10 is actuated depending on the determined braking signal.

According to this preferred embodiment, the parking brake 20 is released if the control parking brake force resulting from the hydraulic pressure inside of the parking brake 20 is larger than the default parking brake force induced by the spring brake unit. In turn, the parking brake 20 is hydraulically actuated if the control parking brake force resulting from the hydraulic pressure inside of the parking brake 20 is smaller than the default parking brake force induced by the spring brake unit.

### Reference signs

- 1: braking device
- 2: braking system
- 3: vehicle
- 3a: braking pedal
- 10: service brake
- 11: service brake cylinder
- 12: disk pack unit
- 20: parking brake
- 21: spring braking unit
- 22: parking brake cylinder
- 23: hydraulic park braking control unit
- 24: control valve
- 30: sensor unit
- 40: hydraulic service braking control unit
- 41: master brake cylinder
- 50: hydraulic pump
- 60: hydraulic accumulator
- 70: check valve

## Claims

1. A braking device (1) for braking a vehicle (3), in particular for braking a mobile working machine, preferably for braking a compact wheel loader, the braking device (1) comprising:
- a hydraulically actuated service brake (10) configured for braking the vehicle (3), wherein the service brake (10) comprises
∘ a service brake cylinder (11) that is configured to transfer a service braking force induced by a master brake cylinder (41) in operation to a disk pack unit (12) while braking and
∘ the disk pack unit (12) that is configured for braking the vehicle (3) depending on the braking force, and
- a hydraulically actuated parking brake (20), wherein the parking brake (20) is a spring applied hydraulic release brake that is configured for braking the vehicle (3) depending on a parking brake force, wherein the parking brake (20) comprises
∘ a spring braking unit (21) that is configured to generate a default parking brake force and to transfer the default parking brake force onto a parking brake cylinder (22), and
∘ a hydraulic park braking control unit (23) that is configured to generate a release force and to transfer the release force onto the parking brake cylinder (22) in order to control the parking brake force, and
∘ the parking brake cylinder (22) that is in mechanical contact with the disk pack unit (12), wherein the parking brake cylinder (22) is configured to transfer the parking braking force to the disk pack unit (12) while braking depending on the control parking brake force and the default parking brake force,
**characterized in that**
- the hydraulic park braking control unit (23) comprises a control valve (24) that is hydraulically connected to the parking brake (20) and configured for controlling a hydraulic pressure inside of the parking brake (20) depending on a braking signal for hydraulically actuating and/or releasing the parking brake (20).

2. A braking device (1) according to the preceding claim 1, wherein the control valve (24) is a proportional valve and/or a 3/2 directional valve and/or a spring reset valve.

3. A braking device (1) according to any one of the preceding claims 1 or 2, comprising a sensor unit (30) that is adapted for detecting the braking signal for braking the vehicle (3).

4. A braking device (1) according to the preceding claim 3, wherein the sensor unit (30) comprises
- an angle sensor that is configured for detecting an angle of a braking pedal (3a), and/or
- a position sensor that is configured for detecting a position of the braking pedal (3a) and/or a position of the service brake cylinder (11) and/or the master brake cylinder (41), and/or
- a hydraulic pressure sensor that is configured for detecting a hydraulic pressure inside of the parking brake (20).

5. A braking device (1) according to any one of the preceding claims 1 to 4, wherein the control valve (24) controls the hydraulic flow into the parking brake (20) for releasing the parking brake (20) and/or out of the parking brake (20) for braking the parking brake (20) depending on the braking signal detected by the sensor unit (30).

6. A braking device (1) according to any one of the preceding claims 1 to 5, wherein
- the parking brake (20) is actuated depending on an opening pressure, and/or
- the service brake (10) is actuated depending on an actuation pressure.

7. A braking device (1) according to any one of the preceding claims 1 to 6, wherein the service brake (10) comprises a hydraulic service braking control unit (40) that is configured to generate the service braking force and to transfer the service braking force to the service brake cylinder (11), wherein preferably, the hydraulic service braking control unit (40) comprises a master brake cylinder (41) that is hydraulically connected to the service brake cylinder (11) for generating the service braking force and/or a brake pedal (3a) that is connected to the master brake cylinder (41).

8. A braking system (2) for braking a vehicle (3), in particular for braking a mobile working machine, preferably for braking a compact wheel loader, the braking system (2) comprising:
- a braking device (1) according to any one of the preceding claims 1 to 7, and
- a hydraulic pump (50) for providing a hydraulic medium inside of the parking brake (20), and/or
- a hydraulic accumulator (60) for providing a hydraulic medium inside of the parking brake (20), and/or
- a check valve (70), preferably arranged between the pump and the control valve (24), in particular arranged between the pump and the hydraulic accumulator.

9. A vehicle (3), in particular a mobile working machine, preferably a compact wheel loader, comprising a braking device (1) according to any one of the preceding claims 1 to 7 and/or a braking system (2) according to the preceding claim 8.

10. A method (1000) for braking a vehicle (3) according to the preceding claim 9, in particular for braking a mobile working machine, preferably for braking a compact wheel loader,
the vehicle (3) comprising a braking device (1) according to any one of the preceding claims 1 to 7 and/or a braking system (2) according to the preceding claim 8,
the method comprising the steps of:
- determining (1010) the braking signal detected by a sensor unit (30), wherein preferably, the braking signal is an angle of a braking pedal (3a) and/or a position of the braking pedal (3a) and/or a position of the service brake cylinder (11) and/or the master brake cylinder (41), and/or the hydraulic pressure inside of a parking brake (20); and
- controlling (1020) the hydraulic pressure inside of the parking brake (20) and/or the service brake (10) depending on the determined braking signal for hydraulically actuating and/or releasing the parking brake (20) in order to brake the vehicle (3).

11. A method (1000) according to the preceding claim 10, wherein
- in a regular operation of the parking brake (20), the parking brake (20) is actuated depending on, in particular proportionally to, the determined braking signal, and/or
- in a failure operation of the parking brake (20), the service brake (10) is actuated depending on the determined braking signal.

12. A method (1000) according to the preceding claims 10 or 11, wherein
- the parking brake (20) is released if the control parking brake force resulting from the hydraulic pressure inside of the parking brake (20) is larger than the default parking brake force induced by the spring brake unit; and/or
- the parking brake (20) is hydraulically actuated if the control parking brake force resulting from the hydraulic pressure inside of the parking brake (20) is smaller than the default parking brake force induced by the spring brake unit.

13. A computer program comprising program code means for performing the steps of any one of the preceding of claims 10 to 12 when said program is run on a computer.

14. A computer readable medium carrying a computer program comprising program code means for performing the steps of any one of the preceding of claims 10 to 12 when said program product is run on a computer.

15. Control unit configured for controlling a braking device (1) according to any one of the preceding claims 1 to 7 and/or for controlling a braking system (2) according to the preceding claim 8, wherein the control unit is configured to perform the steps of any one of the preceding claims 10 to 12.
